# EUROPEAN PATENT SPECIFICATION

(11) **EP 4 310 143 B1**
(45) Date of publication and mention of the grant of the patent: **18.11.2026**
(21) Application number: 22770979.7
(22) Date of filing: 15.02.2022
(51) Int. Cl.: C08L 23/10, B32B 15/085, B32B 27/32, B65D 65/40, C08L 23/04, C08L 23/26, H01M 50/121, H01M 50/126, H01M 50/534, H01M 50/591

(54) **RESIN COMPOSITION, FILM INCLUDING SAID RESIN COMPOSITION, AND USE THEREOF**
HARZZUSAMMENSETZUNG, FOLIE MIT DIESER HARZZUSAMMENSETZUNG UND VERWENDUNG DAVON
COMPOSITION DE RÉSINE, FILM COMPRENANT LADITE COMPOSITION DE RÉSINE ET SON UTILISATION

(30) Priority: 15.03.2021 JP 2021041236
(43) Date of publication of application: 24.01.2024
(73) Proprietor: Mitsui Chemicals, Inc., Tokyo 104-0028 (JP)
(72) Inventor: YOSHIMOTO Koya, Shanghai 200070 (CN); IZAIKE Yuhei, Ichihara-shi, Chiba 299-0108 (JP)
(74) Representative: Hoffmann Eitle
(86) International application number: PCT/JP2022/005840
(87) International publication number: WO 2022/196220

(56) References cited:
- WO-A1-2018/180165
- WO-A1-2018/180862
- WO-A1-2019/176403
- JP-A- 2004 269 688
- JP-A- 2013 241 589

## Description

### Technical Field

The present invention relates to a resin composition, a film comprising the resin composition, and use thereof.

### Background Art

Conventionally, polypropylenes have been widely used as thermoplastic forming materials having, for example, high rigidity, heat resistance, and transparency. Since these polypropylenes are nonpolar materials, they have poor adhesiveness to, for example, metallic materials such as aluminum and polar materials such as ethylene·vinyl alcohol copolymers. For the purpose of improving adhesiveness, techniques of modifying polypropylenes with an unsaturated carboxylic acid or a derivative thereof have been widely known. Moreover, since the polypropylene has poor flexibility, a soft rubber component is usually compounded into the polypropylene upon use as an adhesive resin. There is proposed a polypropylene-based adhesive resin in which adhesive properties have been improved by compounding a soft rubber component to polypropylene (Patent Literature 1).

Moreover, when a polypropylene having high gas permeability, is used as a food packaging material, it is often stacked for use with polar resins such as an ethylene·vinyl alcohol copolymer (EVOH) with gas barrier properties, polyamide (PA) and polyester (for example, polyethylene terephthalate (PET)), in order to maintain freshness and prolong a shelf life of the contents. Such multilayer films are processed for use in container forms such as cups and trays, by fabrication, such as drawing. For example, Patent Literature 2 proposes a multilayer film for drawing.

Furthermore, polypropylenes are also used as a construction/industrial material because of, for example, their moderate flexibility, abrasion resistance, scratch resistance, heat resistance, chemical resistance, and postprocessability. Examples of the construction/industrial material include, for example, decorative films that are used as decorative boards in which they are adhered on surfaces of wood boards, inorganic boards and metal plates, for example, with adhesives. For example, Patent Literature 3 proposes a technology for bonding a patterned layer on a base film that constitutes a decorative film and a polypropylene protective layer for protecting the pattern layer via a polypropylene-based adhesive resin layer.

Meanwhile, metal cans have conventionally been used for secondary batteries, representative examples including lithium ion batteries. In recent years, laminated packaging materials in which a composite of an aluminum foil stacked with a resin film was formed into a bag, have been used in response to demand for thinner and more diversified products. A metal lead base material made of, for example, aluminum or nickel is attached to metal base materials of positive and negative electrodes of lithium ion batteries in order to extract electricity. In order to prevent a short circuit between the lead base material and the aluminum foil of the laminate packaging material or leakage of an electrolytic solution, a film-shaped insulator (tab lead film) is generally interposed between the lead base material and the innermost resin layer (sealant) of the laminate packaging material and sealed at the sealing portion of the lead base material in order to improve a sealing strength therebetween. For example, Patent Literatures 4 to 6 propose sealing materials for tab leads, such as tab lead films.

### Citation List

### Patent Literature

[Patent Literature 1] JPH04-300933A
[Patent Literature 2] JP2000-301675A
[Patent Literature 3] JP4803441B
[Patent Literature 4] JP2014-210841A
[Patent Literature 5] JP2014-225378A
[Patent Literature 6] WO2014/106887
WO 2018/180862 A1 relates to a method for producing a laminate that includes a polypropylene-based adhesive layer (I) and a base material layer (II), which meet the following Requirements (1) to (5). Requirement (1): The adhesive layer (I) contains 97-70 wt% of a propylene copolymer (A) and 3-30 wt% of a copolymer (B) having structural units derived from butene (here, the total quantity of copolymers (A) and (B) is 100 wt%). Requirement (2): The copolymer (A) has a melting point (TmA) of 70-120°C, as measured by differential scanning calorimetry (DSC), and has a content of structural units derived from butene of less than 1 mol%. Requirement (3): The copolymer (B) has a melting point (TmB) of 130°C or lower, as measured by differential scanning calorimetry (DSC), and has a content of structural units derived from butene of 1 mol% or more. Requirement (4): The adhesive layer (I) contains a polymer (C) having structural units derived from at least one type of graft monomer selected from the group consisting of unsaturated carboxylic acids and derivatives thereof. Requirement (5): The base material layer (II) contains a polyester-based resin.

### Summary of Invention

### Technical Problem

In recent years, films with adhesiveness have been required to improve adhesiveness at low temperatures, which enables bonding with less heat, in order to improve their productivity. Furthermore, films for a food packaging material, which are processed into container shapes such as cups and trays and then used, films for a construction/industrial material such as decorative films, and components for secondary batteries, such as an exterior material for lithium ion batteries, are subjected to fabrication such as drawing and folding, which thereby requires prevention of whitening upon fabrication as well. However, conventional technologies such as those described in Patent Literatures 2 to 6 have been difficult to satisfy these requirements.

The present invention was made in view of the aforementioned problems, and on abject of the present invention is to provide a food packaging material and a construction/industrial material, which are excellent in adhesiveness at low temperatures and prevention of whitening, an adhesive resin composition capable of forming a component for secondary batteries, a film containing the resin composition, a food packaging material and a construction/industrial material including the films, and a component for secondary batteries.

### Solution to Problem

The present inventors have made investigations to solve the aforementioned problems. As a result, the present inventors have found that the aforementioned problems can be solved by the following aspects, and thus have completed the present invention.
[1] A resin composition, wherein
   the content of a propylene-based polymer (A) satisfying (a) below is 20 to 84 parts by mass,
   the content of a propylene-based polymer (B) satisfying (b) below is 5 to 35 parts by mass,
   the content of a polyolefin (C) obtained by modification with an unsaturated carboxylic acid and/or a derivative thereof and containing structural units derived from an unsaturated carboxylic acid and/or a derivative thereof is 1 to 20 parts by mass, and
      the content of an ethylene-based polymer (D) satisfying (d) below is 5 to 35 parts by mass,
   provided that the total content of components (A), (B), (C) and (D) is 100 parts by mass, wherein
      (a) a melting point (Tm) as observed in differential scanning calorimetry is lower than 120°C and 100°C or higher;
      (b) the propylene-based polymer (B) has a MFR in a range of 0.01 to 100 g/10 minutes as measured at 230°C under a load of 2.16 kg in accordance with ASTM D1238, and satisfies requirements (b-1) and (b-2) below:
         (b-1) a melting point (Tm) as observed in differential scanning calorimetry is lower than 100°C, or no melting point (Tm) is observed;
         (b-2) the propylene-based polymer (B) has a constituent unit derived from propylene and a constituent unit derived from at least one olefin selected from ethylene and α-olefins having 4 to 20 carbon atoms, and the content of the constituent unit derived from at least one olefin selected from ethylene and α-olefins having 4 to 20 carbon atoms is 40 mol% or less; and
      (d) the ethylene-based polymer (D) is an ethylene homopolymer or a copolymer of ethylene and at least one α-olefin selected from α-olefins having 3 to 20 carbon atoms, and has a MFR in the range of 0.1 to 10 g/10 minutes as measured at 190°C under a load of 2.16 kg in accordance with ASTM D1238.
[2] The resin composition according to [1], wherein the density of the ethylene-based polymer (D) is 0.87 g/cm³ or less.
[3] A monolayer or multilayer film, comprising at least one layer containing the resin composition according to [1] or [2].
[4] A multilayer film, comprising at least one layer containing the resin composition according to [1] or [2], and at least two further layers other than the layer containing the resin composition, wherein both sides of the layer containing the resin composition are in contact with the further layers.
[5] A multilayer film, comprising at least one layer containing the resin composition according to any one of [1] or [2], and at least one layer selected from a metal-containing layer, a polyolefin layer and a polar resin layer, wherein the layer containing the resin composition is in contact with at least one layer of the metal-containing layer, the polyolefin layer and the polar resin layer.
[6] A food packaging material, comprising the monolayer or multilayer film according to [3], or the multilayer film according to [4] or [5].
[7] A construction/industrial material, comprising the monolayer or multilayer film according to [3], or the multilayer film according to [4] or [5].
[8] A component for secondary batteries, comprising the monolayer or multilayer film according to [3], or the multilayer film according to [4] or [5].
[9] The component for secondary batteries according to [8], being an exterior material for lithium ion batteries.
[10] The component for secondary batteries according to [8], being a tab lead film for lithium ion batteries.
[11] A method for producing a monolayer or multilayer film, comprising melt extrusion forming the resin composition according to [1] or [2].

### Advantageous Effects of Invention

According to the present invention, a food packaging material and a construction/industrial material, which are excellent in adhesiveness at low temperatures and prevention of whitening, an adhesive resin composition capable of forming a component for secondary batteries, a film containing the resin composition and a food packaging material and a construction/industrial material including the films, and a component for secondary batteries, can be provided.

### Description of Embodiments

The numerical value range used herein represented by using "~" refers to a range including the numerical values described before and after "~" as lower limit values and upper limit values.

The resin composition of the present invention contains a propylene-based polymer (A) and a polyolefin (C) including structural units derived from an unsaturated carboxylic acid and/or a derivative thereof, and also contains a propylene-based polymer (B) or an ethylene-based polymer (D), or a propylene-based polymer (B) and an ethylene-based polymer (D).

### propylene-based polymer (A)

Examples of the propylene-based polymer (A) include propylene homopolymers, or copolymers of propylene and at least one α-olefin having 2 to 20 carbon atoms excluding propylene. Here, examples of the α-olefins having 2 to 20 carbon atoms excluding propylene include ethylene, 1-butene, 1-pentene, 1-hexene, 4-methyl-1-pentene, 1-octene, 1-decene, 1-dodecene, 1-tetradecene, 1-hexadecene, 1-octadecene, and 1-eicosene, and preferred is ethylene or α-olefins having 4 to 10 carbon atoms.

The copolymer of propylene and these α-olefins may be random copolymers, or may be block copolymers. The structural units derived from these α-olefins can be included in a proportion of 35 mol % or less and preferably 30 mol % or less in the copolymer of the α-olefins and propylene.

The propylene-based polymer (A) satisfies the following requirement (a):
(a) The melting point (Tm) as observed in differential scanning calorimetry is lower than 120°C and 100°C or higher. Within the aforementioned range of the melting point (Tm), the resin composition of the present invention has excellent resistance to whitening and adhesiveness under low amount of heat.

The melting point (Tm) is preferably 100 to 115°C and more preferably 100 to 110°C.

The propylene-based polymer (A) desirably has a melt flow rate (MFR) in a range of 0.01 to 1,000 g/10 minutes and preferably 0.1 to 100 g/10 minutes, as measured at 230°C under a load of 2.16 kg in accordance with ASTM D1238.

The aforementioned propylene-based polymer (A) can have either an isotactic structure or syndiotactic structure, taking into consideration compatibility with the propylene-based polymer (B), as described below.

In other words, examples of forms of the propylene-based polymer (A) include an isotactic propylene-based polymer (A1) and a syndiotactic propylene-based polymer (A2).

Such an isotactic propylene-based polymer (A1) can be produced, for example, through polymerization of propylene or copolymerization of propylene and other α-olefin, in a Ziegler catalyst system composed of solid catalyst components containing, for example, magnesium, titanium, halogen, and an electron donor as essential components, an organic aluminum compound, and an electron donor, or in a metallocene catalyst system using a metallocene compound as one component of the catalyst.

The syndiotactic propylene-based polymer (A2) includes 90 mol% or more of a structural unit derived from propylene and 10 mol% or less of structural units derived from one or more selected from ethylene and α-olefins having 4 to 20 carbon atoms, and preferably 91 mol% or more of a structural unit derived from propylene and 9 mol% or less of structural units derived from one or more selected from ethylene and α-olefins having 4 to 20 carbon atoms, provided that the total of both structural units is 100 mol%.

Examples of the α-olefins having 4 to 20 carbon atoms include, for example, 1-butene, 3-methyl-1-butene, 1-pentene, 1-hexene, 4-methyl-1-pentene, 1-octene, 1-decene, 1-dodecene, 1-tetradecene, 1-hexadecene, 1-octadecene, and 1-eicosene.

The syndiotactic propylene-based polymer (A2) usually has a melting peak of lower than 120°C and 100°C or higher and preferably in a range of 100 to 110°C, as measured by a differential scanning calorimeter DSC.

The syndiotactic propylene-based polymer (A2) can be produced by a method described in WO2011/078054, for example.

### (B) propylene-based polymer

The propylene-based polymer (B) satisfies the following requirement (b):
(b) The propylene-based polymer (B) has a MFR measured at 230°C under a load of 2.16 kg in accordance with ASTM D1238 being in a range of 0.01 to 100 g/10 minutes, and satisfies requirements (b-1) and (b-2) below:
(b-1) The melting point (Tm) is lower than 100°C, or no melting point is observed.
(b-2) The propylene-based polymer (B) has a constituent unit derived from propylene and a constituent unit derived from at least one olefin selected from ethylene and α-olefins having 4 to 20 carbon atoms, and the content the constituent unit derived from at least one α-olefin selected from ethylene and α-olefins having 4 to 20 carbon atoms is 40 mol% or less.

Hereinafter, the requirement (b) and others will be described in detail.

### Requirement (b)

The melt flow rate (MFR; ASTM D1238, 230°C, under 2.16 kg load) of the propylene-based polymer (B) is 0.01 to 100 g/10 minutes and preferably 0.1 to 30 g/10 minutes.

The propylene-based polymer (B) also satisfies requirements (b-1) and (b-2).

### (Requirement (b-1))

The melting point (Tm) as observed in differential scanning calorimetry is lower than 100°C, or no melting point is observed. Here, the term "no melting point is observed" indicates that in differential scanning calorimetry, a crystal melting peak having an amount of heat upon crystal melting of 1 J/g or more is not observed in the range of -150 to 200°C. The details of the condition for the measurement of the melting point are as described in Examples later.

The aforementioned melting point (Tm) is preferably 90°C or lower and more preferably 80°C or lower. The melting point (Tm) satisfying the aforementioned conditions, is preferable in terms of compatibility with a propylene-based polymer and adhesiveness at low temperatures.

### (Requirement (b-2))

The propylene-based polymer (B) has a constituent unit derived from propylene and a constituent unit derived from at least one olefin selected from ethylene and α-olefins having 4 to 20 carbon atoms, and the content of the constituent unit derived from at least one α-olefin selected from ethylene and α-olefins having 4 to 20 carbon atoms is 40 mol% or less.

Examples of the α-olefins having 4 to 20 carbon atoms include, for example, 3-methyl-1-butene, 1-butene, 1-pentene, 1-hexene, 4-methyl-1-pentene, 1-octene, 1-decene, 1-dodecene, 1-tetradecene, 1-hexadecene, 1-octadecene, and 1-eicosene. The at least one olefin selected from ethylene and α-olefins having 4 to 20 carbon atoms is particularly preferably ethylene, 1-butene, 1-hexene, 4-methyl-1-pentene, or 1-octene.

The content of the constituent unit derived from at least one α-olefin selected from ethylene and α-olefins having 4 to 20 carbon atoms is preferably 40 mol% or less and more preferably 35 mol% or less.

### (Other requirements)

The density of the propylene-based polymer (B) measured by JIS K7112 (density gradient tube method) is preferably 0.85 to 0.89 g/cm³ and more preferably 0.86 to 0.88 g/cm³.

The intrinsic viscosity [η] of the propylene-based polymer (B) measured in decalin at 135°C is desirably 0.1 to 10 dL/g and preferably 0.5 to 10 dL/g.

This propylene-based polymer (B) has a single glass transition temperature, and the glass transition temperature (Tg) obtained by differential scanning calorimetry (DSC) is usually in a range of -50°C to 10°C, preferably -45°C to 5°C, and more preferably -40°C to 0°C. The propylene-based polymer (B) is excellent in cold resistance and lowered temperature properties when the glass transition temperature (Tg) is within the aforementioned range, which is preferred.

Differential scanning calorimetry is performed as follows, for example. By using a DSCRDC220 manufactured by Seiko Instruments Inc., a sample of approximately 10.00 mg is packed in a dedicated aluminum pan, raised to a temperature from 30°C to 200°C at 200°C/min and held at 200°C for 5 minutes, and then it is lowered to a temperature from 200°C to -100°C at 10°C/min and held at -100°C for 5 minutes, then to determine a glass transition temperature (Tg) from an endothermic curve upon raising temperature at 10°C/minutes.

A molecular weight distribution (Mw/Mn in terms of polystyrene, Mw: weight-average molecular weight, Mn: numberaverage molecular weight) of the propylene-based polymer (B) as measured by GPC is preferably 3.5 or less and more preferably 3.0 or less. The lower limit value is also 1.5 or more, for example.

The propylene-based polymer (B) may be partially graftmodified by polar monomers. Examples of polar monomers include, for example, a hydroxyl group-containing ethylenically unsaturated compound, amino group-containing ethylenically unsaturated compound, epoxy group-containing ethylenically unsaturated compound, aromatic vinyl compound, vinyl ester compound, and vinyl chloride. The modified propylene-based polymer (B) is obtained by allowing the propylene-based polymer (B) as described above to be graft-polymerized with polar monomers. When the propylene polymer (B) is graft-polymerized with the polar monomers as described above, the polar monomer is usually used in an amount of 0.1 to 10 parts by mass and preferably 0.1 to 5 parts by mass, per 100 parts by mass of the propylene-based polymer (B). This graft polymerization is usually performed in the presence of a radical initiator. As the radical initiator, an organic peroxide or an azo compound, for example, can be used. The radical initiator can be mixed as is with the propylene-based polymer (B) and polar monomer and used, or can be dissolved in a small amount of organic solvent and then used. Any organic solvent that can dissolve the radical initiator can be used without limitation in particular. When the propylene-based polymer (B) is graft-polymerized with a polar monomer, a reducing substance may be used. Use of the reducing substance can improve the graft amount of the polar monomer.

Graft modification of the propylene-based polymer (B) with polar monomers can be carried out by conventionally known methods, and can be carried out by, for example, dissolving the propylene-based polymer (B) in an organic solvent, then adding a polar monomer and a radical initiator, for example, to the solution, and reacting the mixture at a temperature of 70 to 200°C and preferably 80 to 190°C, for 0.5 to 1.5 hrs, preferably 1 to 10 hours. A modified propylene polymer (B) can also be produced by reacting the propylene-based polymer (B) with a polar monomer without a solvent by using, for example, an extruder. This reaction is usually desirably carried out at a temperature of the melting point of the propylene-based polymer (B) or higher and specifically at 120 to 250°C, and usually for 0.5 to 10 minutes.

The amount modified (amount grafted with a polar monomer) of the modified propylene-based polymer thus obtained is desirably usually 0.1 to 10% by mass, preferably 0.1 to 5% by mass, and more preferably 0.5 to 5% by mass.

The propylene-based polymer composition of the present invention containing the aforementioned modified propylene-based polymer, may result in rendering excellent adhesiveness and compatibility with other resins and improve wettability of a formed body surface.

The propylene-based polymer (B) can be produced by employing, for example, the method as described in WO2004/087775.

Preferred forms of the propylene-based polymer (B) include the following propylene·1-butene copolymer (B1), propylene·ethylene copolymer (B2), propylene·ethylene·1-butene copolymer (B3), and atactic propylene homopolymer (B4).

The aforementioned propylene·1-butene copolymer (B1) includes a constituent unit derived from propylene in an amount of 60 to 90 mol% and preferably 70 to 85 mol%, in the aforementioned propylene-based polymer (B).

The propylene·1-butene copolymer (B1) having such a composition has favorable compatibility with the propylene polymer (A).

The propylene·ethylene copolymer (B2) includes a constituent unit derived from propylene in an amount of 60 to 95 mol% and preferably 75 to 90 mol%, in the aforementioned propylene-based polymer (B).

The propylene·ethylene·1-butene copolymer (B3) includes a constituent unit derived from propylene in an amount of 60 to 95 mol% and preferably 70 to 90 mol%, and a constituent unit derived from ethylene in an amount of 2 to 25 mol% and preferably 5 to 20 mol%, and a constituent unit derived from 1-butene in an amount of 3 to 30 mol% and preferably 5 to 25 mol%, in the aforementioned propylene-based polymer (B).

The atactic propylene homopolymer (B4) has a mesopentad fraction of 20 to 80% and preferably 30 to 60%, in the aforementioned propylene-based polymer (B).

### Polyolefin (C) containing structural units derived from unsaturated carboxylic acid and/or derivative thereof

The polyolefin (C) is obtained by modification of a polyolefin with an unsaturated carboxylic acid and/or a derivative thereof, and contains structural units derived from the unsaturated carboxylic acid and/or the derivative thereof.

Examples of the polyolefin to be modified can include a polypropylene (c1), ethylene·propylene·α-olefin copolymer (c2), and ethylene·α-olefin copolymer (c3).

These polyolefins (C) may be used singly or as a mixture of two or more thereof. For example, the polyolefin (C) may be one of a modified product of the polypropylene (c1), modified product of the ethylene·propylene·α-olefin copolymer (c2), and modified product of the ethylene·α-olefin copolymer (c3), or may be a mixture of two or more thereof.

The polypropylene (c1) may be a homopolymer of propylene and/or a propylene ·α-olefin copolymer, for example. Examples of the α-olefin preferably include, but are not limited to, ethylene and α-olefins having 4 to 20 carbon atoms, and these α-olefins may be used singly or in combinations of two or more thereof. Preferred α-olefin is ethylene and an α-olefin having 4 to 10 carbon atoms, and among these, particularly suitable are ethylene and an α-olefin having 4 to 8 carbon atoms. Here, the content of a structural unit derived from propylene in the propylene·α-olefin copolymer is at least 50 mol % or more and less than 100%.

The polypropylene (c1) preferably has an intrinsic viscosity [η] of 0.1 to 10 dl/g. An intrinsic viscosity [η] in this range can yield a composition excellent in high formability and mechanical strength.

Methods for producing the polypropylene (c1) are not particularly limited, and include well-known methods using well-known catalysts such as a Ziegler-Natta catalyst and metallocene catalyst.

The polypropylene (c1) is preferably a crystalline polymer, and if the polypropylene (c1) is a copolymer, it may be a random copolymer or may be a block copolymer. Furthermore, the polypropylene (c1) may have any stereoregularity and any molecular weight without particular limitation as long as the (c1) satisfies its formability and has a sufficient strength in use when formed into a formed body. A commercially available resin can also be used as is.

The ethylene·propylene·α-olefin copolymer (c2) is specified by the following requirements (i) and (ii), for example:
(i) The ethylene·propylene·α-olefin copolymer (c2) contains 45 to 90 mol% of a structural unit derived from propylene, 2 to 25 mol% of a structural unit derived from ethylene, and 3 to 30 mol% of a structural unit derived from an α-olefin having 4 to 20 carbon atoms. (ii) The intrinsic viscosity [η] at 135°C in decalin is in a range of 0.1 to 10 dl/g.

As the α-olefin, α-olefins having 4 to 10 carbon atoms can be suitably used and may be used singly or in combinations or two or more thereof. For proportions of structural units derived from each monomer, the proportions of structural units derived from propylene, ethylene, and the α-olefin are preferably 60 to 95 mol% for propylene, 2 to 25 mol% for ethylene, and 3 to 30% for the α-olefin, respectively, and further preferably 70 to 90 mol% for propylene, 5 to 20 mol% for ethylene, and 5 to 25 mol% for the α-olefin.

In regard of the requirement (ii), the intrinsic viscosity [η] is in the range of more preferably 0.5 to 8 and further preferably 0.8 to 6. The intrinsic viscosity [η] in this range can yield an adhesive having an excellent balance between the flexibility and the mechanical strength and having a high adhesive strength.

A method for producing the ethylene·propylene·α-olefin copolymer (c2) is not particularly limited, and can be produced by well-known methods using well-known catalysts such as a Ziegler-Natta catalyst and metallocene catalyst.

The ethylene·propylene·α-olefin copolymer (c2) may have any stereoregularity and any molecular weight without particular limitation as long as the (c2) satisfies its formability and has a sufficient strength in use when formed into a formed body. A commercially available resin can also be used as is.

The ethylene·α-olefin copolymer (c3) is specified by the following requirements (iii) and (iv):
(iii) The ethylene·α-olefin copolymer (c3) contains 50 to 99 mol% of a structural unit derived from ethylene and 1 to 50 mol% of a structural unit derived from an α-olefin having 3 to 20 carbon atoms.
(iv) The intrinsic viscosity [η] at 135°C in decalin is in a range of 0.1 to 10 dl/g.

α-Olefins having 3 to 10 carbon atoms are more suitable, and one type thereof may be used singly or two or more types thereof may be used. For proportions of structural units derived from each monomer, the proportions of structural units derived from ethylene and the α-olefin are preferably 55 to 98 mol% for ethylene and 2 to 45 mol% for the α-olefin, respectively, and more preferably 60 to 95 mol% and 5 to 40 mol%, respectively.

In regard of the requirement (iv), the intrinsic viscosity [η] is in the range of more preferably 0.5 to 8 and further preferably, 0.8 to 6. The intrinsic viscosity [η] in this range can yield a composition having an excellent balance between the flexibility and the mechanical strength and having a high adhesive strength.

Examples of methods for producing the ethylene·α-olefin copolymer (c3) include, but should not be particularly limited to, a well-known method in the presence of a well-known catalyst such as a Ziegler-Natta catalyst or a metallocene catalyst.

The molecular weight of the ethylene·α-olefin copolymer (c3) is also not particularly limited as long as it has excellent formability and a strength enough to withstand use when formed into a formed body. A commercially available resin can also be used as is for the ethylene·α-olefin copolymer (c3).

Examples of the unsaturated carboxylic acids and/or derivatives thereof used for modification of these polyolefins can include unsaturated compounds having one or more carboxylic groups, esters of compounds having a carboxylic group and alkyl alcohols, and unsaturated compounds having one or more anhydrous carboxylic group, for example. Examples of the unsaturated groups included in the unsaturated compounds can include a vinyl group, vinylene group, and unsaturated cyclic hydrocarbon group, for example. These unsaturated carboxylic acids and/or derivatives thereof can be used singly or in combinations of two or more thereof. Among these, suitable are unsaturated dicarboxylic acids or acid anhydrides thereof, and particularly preferred are maleic acid, nadic acid, or acid anhydrides thereof.

The amount of structural units derived from the unsaturated carboxylic acid and/or the derivative thereof contained in the polyolefin (C) is preferably 0.01 to 10% by mass in terms of structural unit derived from maleic anhydride and more preferably 0.1 to 5% by mass. The amount of structural units derived from the unsaturated carboxylic acid and/or the derivative thereof in this range can yield a resin composition having an excellent balance between the formability and the adhesiveness.

In the polyolefin (C), a content proportion of a structural unit derived from propylene in structural units excluding the structural units derived from the aforementioned unsaturated carboxylic acid and/or the derivative thereof is preferably 80 to 100 mol% and more preferably 90 to 100 mol%. The content proportion of the structural unit derived from propylene in this range can yield a resin composition excellent in heat resistance.

Methods for allowing grafting of the unsaturated carboxylic acid and/or its derivative are not particularly limited, and can employ any conventionally known graft polymerization methods such as a solution method and melt kneading method. Examples thereof include, for example, a method for melting a polyolefin, thereto adding the unsaturated carboxylic acid and/or its derivative thereof to carry out a graft reaction; or a method for dissolving a polyolefin in a solvent to prepare solution, and adding the unsaturated carboxylic acid and/or the derivative thereof to carry out a graft reaction.

### ethylene-based polymer (D)

The ethylene-based polymer (D) satisfies the following requirement (d):
(d) The ethylene-based polymer (D) is an ethylene homopolymer or a copolymer of ethylene and at least one α-olefin selected from α-olefins having 3 to 20 carbon atoms, and has a MFR of 0.1 to 10 g/10 minutes as measured at 190°C under a load of 2.16 kg in accordance with ASTM D1238.

The MFR is preferably in a range of 0.1 to 8 g/10 minutes and further preferably in the range of 0.1 to 6 g/10 minutes. Within the aforementioned range of MFR, a composition with excellent balance between flexibility and mechanical strength and a high adhesive strength, can be yielded.

The aforementioned copolymer is preferably an ethylene·α-olefin copolymer containing 50 to 99 mol% of a constituent unit derived from ethylene and 1 to 50 mol% of a constituent unit derived from an α-olefin selected from α-olefins having 3 to 20 carbon atoms.

The aforementioned copolymer that is an α-olefin having 3 to 10 carbon atoms is more suitably used as the α-olefin, and one type of α-olefin may be used singly or two or more types thereof may be used as long as they are in this range. For ratios of each monomer component, the ratio of ethylene: 55 to 98 mol% and the ratio of α-olefin: 2 to 45 mol% are preferred, and further preferred are the ratio of ethylene: 60 to 95 mol% and the ratio of α-olefin: 5 to 40 mol%.

The ethylene-based polymer (D) can be produced by a well-known method such as a high pressure method or a method in the presence of a well-known catalyst such as a Ziegler-Natta catalyst or a metallocene catalyst, however, the method is not be particularly limited thereto. Furthermore, the molecular weight is also not particularly limited as long as the ethylene-based polymer (D) satisfies formability and has a sufficient strength in use when formed into a formed body. A commercially available resin can also be used as is. The ethylene-based polymer (D) may be grafted with a small amount of, for example, maleic anhydride as long as it satisfies the aforementioned conditions. Moreover, a small amount of, for example, maleic anhydride is grafted, and the grafted monomer is then further modified with, for example, a diamine or carbodiimide as long as the aforementioned conditions are satisfied.

### Other component

In the resin composition of the present invention, other components such as a propylene·ethylene block copolymer, which is different in composition from the present invention, propylene homopolymer, propylene·ethylene random copolymer, propylene·1-butene random copolymer, propylene ethylene·1-butene random copolymer, styrenic elastomer, and polyethylene, may be appropriately included to the extent that the effects of the invention are not impaired. The proportions of the other components in the resin composition according to the present invention are preferably 20% by mass or less.

The resin composition according to the present invention may contain known additives such as antioxidants, ultraviolet absorbing agents, neutralizers, nucleating agents, light stabilizers, antistatic agents, anti-blocking agents, lubricants, odor adsorbents, antibacterial agents, pigments, inorganic and organic fillers, and a variety of synthetic resins as necessary.

### Resin composition

The resin composition according to the present invention can be produced by a known conventional method. For example, the components described above can be melt kneaded to produce the resin composition.

The contents of the propylene-based polymer (A), propylene-based polymer (B), polyolefin (C), and ethylene-based polymer (D) in the resin composition of the present invention per 100 parts by mass of the total content of the propylene-based polymer (A), propylene-based polymer (B), polyolefin (C), and ethylene-based polymer (D) are 20 to 84 parts by mass of propylene-based polymer (A), 10 to 35 parts by mass of propylene-based polymer (B), 1 to 20 parts by mass of polyolefin (C), and 5 to 35 parts by mass of ethylene-based polymer (D).

It is a preferred aspect that the ethylene-based polymer (D) is 5 to 40 parts by mass, and a more preferred aspect of the density of the ethylene-based polymer (D) is that it is 0.87 g/cm³ or less. When the density of the ethylene-based polymer (D) is 0.87 g/cm³ or less, the density is further preferably 0.80 g/cm³ or more.

Within the range of the content of the aforementioned components in the resin composition of the present invention, the adhesiveness in particular adhesiveness under low heat, specifically at 140°C or lower, is high, and a film containing the layer obtained from the present composition is less likely to whiten upon deformation processing.

The resin composition of the present invention preferably has a MFR of 0.1 g/10 minutes to 30 g/10 minutes and more preferably 1 g/10 minutes to 20 g/10 minutes, as measured at 230°C under a load of 2.16 kg in accordance with ASTM D1238. Within the aforementioned range of MFR, resin compositions applicable to various film forming processing methods, such as casting, inflation, and extrusion lamination methods, can be obtained. Moreover, even when film forming is carried out under high-speed forming conditions, orientation of molecular chains is apt to be relaxed, which can inhibit whitening upon subsequent deformation processing.

Whitening upon deformation processing occurs when fine cracks are generated. The fine cracks generated in a film are considered to lower insulation properties when the film is formed into a battery packaging material.

### Monolayer film or multilayer film

The monolayer film and the multilayer film according to the present invention are monolayer films or multilayer films including at least one layer containing the resin composition. In other words, the monolayer film according to the present invention is a film composed of a layer containing the resin composition, and the multilayer film is a multilayer film including at least one layer containing the resin composition.

The monolayer film and the multilayer film according to the present invention have excellent resistance to whitening upon deformation processing. Therefore, when the monolayer and multilayer film of the present invention are used as a food packaging material, a construction/industrial material, and a component for secondary batteries such as a component for lithium ion batteries, whitening is unlikely to occur upon fabrication of the films, such as drawing and folding. Therefore, the monolayer and multilayer film of the present invention can be suitably used as a food packaging material, a construction/industrial material, and a component for secondary batteries.

In particular, polypropylene-based resins have been conventionally used as packaging materials that form exterior bodies of lithium ion batteries, however, the present invention has realized prevention of whitening which could not be avoided with conventional polypropylene-based resins, by using a specific combination of the aforementioned propylene-based polymer (A), propylene-based polymer (B), polyolefin (C) and ethylene-based polymer (D).

The multilayer film of the present invention, for example, includes at least one layer containing the resin composition, and one or both sides of the layer containing the composition are in contact with further layers included in the multilayer film. Examples of the further layers in contact with the layer containing the composition include, for example, a metal-containing layer, polyolefin layer, and polar resin layer. Examples of the metal-containing layer can include, for example, an aluminum layer, copper layer, and stainless steel layer, examples of the polyolefin layer can include, for example, a polypropylene layer, poly4-methylpentene layer, and polyethylene layer, and examples of the polar resin layer can include, for example, a polyamide layer, EVOH layer, PET layer, and PBT layer.

The monolayer film and the multilayer film according to the present invention can be prepared through melt extrusion forming, and can be generally produced by methods industrially used, such as casting, inflation, or extrusion lamination methods.

### <Component for secondary batteries>

Examples of components for secondary batteries that are applications of the film of the present invention include, for example, a tab lead film for lithium ion batteries (hereinafter simply referred to as "tab lead film") and an exterior material for lithium ion batteries (hereinafter simply referred to as "exterior material"). Here, the tab lead is a terminal that conducts electricity in and out of electrodes in a battery, and has a metal layer as a lead base material and a tab lead film formed on at least one side of the lead base material.

In the tab lead film of the present invention, a layer (film) composed of the composition of the present invention is in contact with a lead base material and can have a further layer as necessary. The tab lead film partially covers the lead base material (lead conductor) and is formed in order to adhere to an inner surface of an exterior material in a lithium ion battery. The tab lead film of the present invention has excellent adhesiveness at low temperatures, which thereby enables adhesion temperature with the lead base material to be lowered than before, resulting in that a heat load upon adhesion can be reduced and its productivity can be improved. Here, the adhesion temperature with the lead base material is not particularly limited as long as it is temperature at which the tab lead film melts, but is preferably 100 to 200°C and more preferably 130°C to 180°C. The heating time is also not particularly limited, but is preferably 1 second to 10 minutes and more preferably 1 second to 1 minute.

One embodiment of the tab lead film of the present invention includes a stacked film having an adhesive layer composed of the composition of the present invention and a heat resistant layer. In lithium ion batteries, the adhesive layer is adhered to a lead base material, and the heat resistant layer is adhered to an inner surface of an exterior material.

As a lead base material connected to a positive electrode of a lithium ion battery, for example, a lead conductor composed of aluminum, titanium, and an alloy containing at least one type selected therefrom is used. Moreover, as a lead base material connected to a negative electrode of a lithium ion battery, for example, a lead conductor composed of copper, nickel, and an alloy containing at least one type selected therefrom is used.

Examples of the heat resistant layer include, for example, a layer composed of a polyolefin resin. Such polyolefin resins include, for example, thermoplastic polyolefin resins such as polyethylene and polypropylene. These may be used in one type singly or two or more types thereof may be used. The polypropylene resin used is preferred in terms of heat resistance. The polyolefin resins may also be crosslinked.

An aspect of the exterior material of the present invention is not particularly limited as long as it has an adhesive layer composed of the composition of the present invention and includes, for example, a laminate film having a configuration of a base material layer/aluminum foil layer/adhesive layer/sealant layer.

### Examples

The present invention will be more specifically described based on Examples, however, the present invention is in no way limited to these Examples.

### [Measurement conditions for physical properties]

### <Melt flow rate (MFR)>

The MFR of propylene-based polymer was measured at 230°C under a load of 2.16 kg, and the MFR of an ethylene-based polymer was measured at 190°C under a load of 2.16 kg, in accordance with ASTM D1238.

### <Density>

The density was measured according to JIS K7112 (density gradient tube method).

### <Composition of polyolefin>

The content ratio of constituent units derived from an α-olefin and constituent units derived from ethylene, in a polyolefin was quantified by ¹³C-NMR using the following apparatus and conditions.

By using a JECX400P nuclear magnetic resonance apparatus manufactured by JEOL Ltd., with a mixture of heavy orthodichlorobenzene/heavy benzene (80/20 volume%) as a solvent, the conditions of a sample concentration of 60 mg/0.6 mL, a measurement temperature of 120°C, an observation nuclear of ¹³C (100 MHz), and a sequence of single-pulse proton decoupling, pulse width of 4.62 µsec (45° pulse), repetition time of 5.5 sec, cumulative number of 8,000, and 29.73 ppm as a reference value for chemical shift, were employed.

### <Melting point>

The melting point was measured using a differential scanning calorimeter (DSC) as follows. Approximately 5 mg of sample was sealed in an aluminum pan, heated from room temperature to 230°C at 10°C/min., and the sample was held at 230°C for 10 minutes for complete melting. The sample was then cooled to -20°C at 10°C/min, placed at -20°C for 10 minutes, and then heated again to 230°C at 10°C/min. The peak temperature in this second heating test was adopted as a melting point (Tm).

### <Graft modification amount>

The amount of structural units derived from the unsaturated carboxylic acid and/or its derivative (graft modification amount) was determined by measuring an intensity of the peak derived from the aforementioned structural unit (1790 cm⁻¹ when maleic anhydride was used) using an infrared absorption spectrometer and using a calibration curve preliminarily prepared.

### <Resistance to whitening>

Each of the adhesives obtained in Examples and Comparative Examples was extruded at 240°C by an extruder with a T-die by using a screw with a diameter of 50 mm and an effective length of L/D = 28 to fabricate a monolayer film with a thickness of 100 µm.

A JIS K6251 No. 2 dumbbell was punched out from the resulting monolayer film so that it was parallel to a flow direction of the monolayer film, and the hue L value was measured by a positive reflection light removal method on a spectrophotometer CM-3700A manufactured by Konica Minolta, Inc. Furthermore, the hue L value of the JIS K6251 No. 2 dumbbell that was subjected to elongation and deformation on a tensile tester by 5 mm, 10 mm, or 20 mm at a crosshead rate of 200 mm/min. The amount of change in hue L value after 5 mm elongation was ΔL (5 mm), that after 10 mm elongation was ΔL (10 mm), and that after 20 mm elongation was ΔL (20 mm).

### <Film formability>

Each of the adhesives obtained in Examples and Comparative Examples was extruded at 240°C by an extruder with a T-die by using a screw with a diameter of 50 mm and an effective length of L/D = 28, taken up by a cooling roll set at 25°C to form a monolayer film with a thickness of 100 µm. Each monolayer film was formed under three conditions of take-up rates of 5 m/min, 10 m/min, and 20 m/min. The monolayer films obtained under each condition were evaluated for film formability according to the following criteria: Formability O: No peel marks were observed on the film surface when the film passed through the cooling rolls. Formability Δ: Peel marks were slightly observed on the film surface when the film passed through the cooling rolls. Formability X: Peel marks were significantly observed on the film surface when the film passed through the cooling rolls.

### <Adhesive strength>

Each of the adhesives obtained in Examples and Comparative Examples and a commercially available polypropylene (F327, MFR: 7, manufactured by Prime Polymer Co., Ltd.) were co-extruded at 240°C by an extruder with a T-die by using a screw with a diameter of 50 mm and an effective length of L/D = 28. The extruded adhesive and polypropylene were stacked in the feed block so that the adhesive was an inner layer and the polypropylene was an outer layer to fabricate a 100 µm thick multilayer film with both the inner layer and outer layer being 50 µm.

The inner layer of the resulting multilayer film and an aluminum foil layer of a commercially available aluminum laminate film (aluminum foil/polyethylene terephthalate: 20/12 µm) were overlaid and heat-sealed by using a heat sealer at a sealing temperature of 120°C, 130°C or 140°C, sealing pressure of 0.1 MPa and a sealing time of 10 seconds, then to fabricate a composite.

The adhesive strength (unit: N/15 mm) of the composite obtained at each sealing temperature was measured at room temperature of 23°C by a T-peel method using a tensile tester. The crosshead speed was 300 mm/min.

### [Polyolefin used]

Polyolefins used in Examples and Comparative Examples will be listed below. Note, however, all of these polyolefins were prepared by polymerization according to the ordinary method, unless otherwise specified.
· PP-1: Metallocene-based random polypropylene (MFR: 8 g/10 minutes, density: 0.89 g/cm³, propylene content: 94 mol%,
   ethylene content: 6 mol%, melting point: 105°C)
· PP-2: Metallocene-based random polypropylene (MFR: 7 g/10 minutes, density: 0.90 g/cm³, propylene content: 96 mol%,
   ethylene content: 4 mol%, melting point: 125°C)
· PP-3: Metallocene-based random polypropylene (MFR: 7 g/10 minutes, density: 0.89 g/cm³, propylene content: 85 mol%,
   1-butene content: 15 mol%, melting point: 98°C)
· PBR: Propylene·1-butene random copolymer
   (MFR: 7 g/10 minutes, density: 0.88 g/cm³, propylene content: 74 mol%,
   1-butene content: 26 mol%, melting point 75°C)
· PER: Propylene·ethylene random copolymer
   (MFR: 7 g/10 minutes, density: 0.87 g/cm³, propylene content: 84 mol%,
   ethylene content: 16 mol%, melting point 60°C)
· Modified PP: Modified homopolypropylene
   (MFR: 100 g/10 minutes, density: 0.90 g/cm³, maleic anhydride graft amount:
   1.5% by mass)
· EPR: Ethylene·propylene random copolymer
   (MFR: 0.6 g/10 minutes, density: 0.87 g/cm³, ethylene content: 80 mol%,
   propylene content: 20 mol%)

### [Example 1] (Reference Example)

### <Production of adhesive>

A resin composition was obtained by melting and kneading 80 parts by mass of PP-1, 10 parts by mass of EPR, and 10 parts by mass of modified PP at 230°C by using a single screw extruder. This composition was defined as Adhesive 1.

### [Examples 2 to 4, Comparative Examples 1 to 5]

In Examples 2 to 4 and Comparative Examples 1 to 5, resin compositions were produced in the same manner as in Example 1, respectively, according to the compounding formulations shown in Table 1. The composition obtained in Example 2 was Adhesive 2, the composition obtained in Example 3 was Adhesive 3, the composition obtained in Example 4 was Adhesive 4, the composition obtained in Comparative Example 1 was Adhesive 5, the composition obtained in Comparative Example 2 was Adhesive 6, the composition obtained in Comparative Example 3 was Adhesive 7, the composition obtained in Comparative Example 4 was Adhesive 8, and the composition obtained in Comparative Example 5 was used as Adhesive 9.

Table 1 shows the MFR and density of each adhesive obtained in Examples and Comparative Examples, the results of resistance to whitening and formability evaluation of the monolayer film obtained from each adhesive, as well as the results of adhesive strength evaluation of the multilayer film obtained from each adhesive. Note, however, the adhesive strength of Adhesive 9 was not measured because the film caused a rough surface due to peel marks upon fabrication of the multilayer film.

**[Table 1]**

| | | | Example 1* | Example 2 | Example 3 | Example 4 | Comparative Example 1 |
|---|---|---|---|---|---|---|---|
| | | | Adhesive 1 | Adhesive 2 | Adhesive 3 | Adhesive 4 | Adhesive 5 |
| Compounding ratio | PP-1 | Parts by mass | 80 | 53 | 65 | 50 | - |
| | PP-2 | Parts by mass | - | - | - | - | 80 |
| | PP-3 | Parts by mass | - | - | - | - | - |
| | PBR | Parts by mass | - | 27 | - | - | - |
| | PER | Parts by mass | - | - | 15 | 30 | - |
| | EPR | Parts by mass | 10 | 10 | 10 | 10 | 10 |
| | Modified PP | Parts by mass | 10 | 10 | 10 | 10 | 10 |
| Resin physical properties | MFR | g/10 minutes | 7.7 | 7.3 | 7.2 | 7.1 | 7.2 |
| | Density | g/cm³ | 0.89 | 0.89 | 0.88 | 0.88 | 0.89 |
| Resistance to whitening | Hue L value (before elongation and deformation) | - | 33 | 33 | 33 | 33 | 33 |
| | Hue L value ( after 5 mm elongation and deformation) | - | 33 | 33 | 33 | 33 | 55 |
| | Hue L value ( after 10 mm elongation and deformation) | - | 33 | 33 | 33 | 33 | 74 |
| | Hue L value ( after 20 mm elongation and deformation) | - | 33 | 33 | 33 | 33 | 77 |
| | ΔL value (5 mm) | - | 0 | 0 | 0 | 0 | 22 |
| | ΔL value (10 mm) | - | 0 | 0 | 0 | 0 | 41 |
| | ΔL value (20 mm) | - | 0 | 0 | 0 | 0 | 44 |
| Formability | Take up speed 5 m/min. | - | ○ | ○ | ○ | ○ | ○ |
| | Take up speed 10 m/min. | - | ○ | ○ | ○ | ○ | ○ |
| | Take up speed 20 m/min. | - | ○ | ○ | Δ | Δ | ○ |
| Adhesive strength | 120°C × 0.1 MPa × 10 sec. | N/15 mm | 0.7 | 1.3 | 1.8 | 1.9 | (Not adhered) |
| | 130°C × 0.1 MPa × 10 sec. | N/15 mm | 4.9 | 5.5 | 5.6 | 6.0 | 0.5 |
| | 140°C × 0.1 MPa × 10 sec. | N/15 mm | 6.0 | 7.0 | 8.7 | 8.8 | 2.2 |

| | | | | | | | |
|---|---|---|---|---|---|---|---|
| *Reference Example | | | | | | | |

**Table 1 (continued)**

| | | | Comparative Example 2 | Comparative Example 3 | Comparative Example 4 | Comparative Example 5 |
|---|---|---|---|---|---|---|
| | | | Adhesive 6 | Adhesive 7 | Adhesive 8 | Adhesive 9 |
| Compounding ratio | PP-1 | Parts by mass | - | - | - | - |
| | PP-2 | Parts by mass | 53 | 65 | 50 | - |
| | PP-3 | Parts by mass | - | - | - | 80 |
| | PBR | Parts by mass | 27 | - | - | - |
| | PER | Parts by mass | - | 15 | 30 | - |
| | EPR | Parts by mass | 10 | 10 | 10 | 10 |
| | Modified PP | Parts by mass | 10 | 10 | 10 | 10 |
| Resin physical properties | MFR | g/10 minutes | 6.6 | 6.5 | 6.4 | 7.2 |
| | Density | g/cm³ | 0.89 | 0.89 | 0.89 | 0.89 |
| Resistance to whitening | Hue L value (before elongation and deformation) | - | 32 | 33 | 32 | 33 |
| | Hue L value ( after 5 mm elongation and deformation) | - | 32 | 33 | 33 | 33 |
| | Hue L value ( after 10 mm elongation and deformation) | - | 33 | 36 | 33 | 33 |
| | Hue L value ( after 20 mm elongation and deformation) | - | 35 | 37 | 34 | 33 |
| | ΔL value (5 mm) | - | 0 | 0 | 0 | 0 |
| | ΔL value (10 mm) | - | 1 | 3 | 1 | 0 |
| | ΔL value (20 mm) | - | 3 | 4 | 2 | 0 |
| Formability | Take up speed 5 m/min. | - | ○ | ○ | ○ | ○ |
| | Take up speed 10 m/min. | - | ○ | ○ | ○ | Δ |
| | Take up speed 20 m/min. | - | ○ | Δ | Δ | × |
| Adhesive strength | 120°C × 0.1 MPa × 10 sec. | N/15 mm | (Not adhered) | (Not adhered) | (Not adhered) | - |
| | 130°C × 0.1 MPa × 10 sec. | N/15 mm | 1.6 | 1.8 | 2.0 | - |
| | 140°C × 0.1 MPa × 10 sec. | N/15 mm | 2.9 | 4.2 | 4.6 | - |

## Claims

1. A resin composition, wherein
a content of a propylene-based polymer (A) satisfying (a) below is 20 to 84 parts by mass,
a content of a propylene-based polymer (B) satisfying (b) below is 5 to 35 parts by mass,
a content of a polyolefin (C) obtained by modification with an unsaturated carboxylic acid and/or a derivative thereof and containing structural units derived from the unsaturated carboxylic acid and/or the derivative thereof is 1 to 20 parts by mass, and
a content of an ethylene-based polymer (D) satisfying (d) below is 5 to 35 parts by mass,
provided that a total content of components (A), (B), (C) and (D) is 100 parts by mass, wherein
(a) a melting point (Tm) as observed in differential scanning calorimetry is lower than 120°C and 100°C or higher;
(b) the propylene-based polymer (B) has a MFR in a range of 0.01 to 100 g/10 minutes as measured at 230°C under a load of 2.16 kg in accordance with ASTM D1238, and satisfies requirements (b-1) and (b-2) below:
(b-1) a melting point (Tm) as observed in differential scanning calorimetry is lower than 100°C, or no melting point (Tm) is observed;
(b-2) the propylene-based polymer (B) has a constituent unit derived from propylene and a constituent unit derived from at least one olefin selected from ethylene and α-olefins having 4 to 20 carbon atoms, and a content of the constituent unit derived from at least one olefin selected from ethylene and α-olefins having 4 to 20 carbon atoms is 40 mol% or less; and
(d) the ethylene-based polymer (D) is an ethylene homopolymer or a copolymer of ethylene and at least one α-olefin selected from α-olefins having 3 to 20 carbon atoms, and has a MFR in a range of 0.1 to 10 g/10 minutes as measured at 190°C under a load of 2.16 kg in accordance with ASTM D1238.

2. The resin composition according to claim 1, wherein a density of the ethylene-based polymer (D) is 0.87 g/cm³ or less.

3. A monolayer or multilayer film, comprising at least one layer containing the resin composition according to claim 1 or 2.

4. A multilayer film, comprising at least one layer containing the resin composition according to claim 1 or 2, and at least two further layers other than the layer containing the resin composition, wherein both sides of the layer containing the resin composition are in contact with the further layers.

5. A multilayer film, comprising at least one layer containing the resin composition according to any one of claims 1 to 4, and at least one layer selected from a metal-containing layer, a polyolefin layer and a polar resin layer, wherein the layer containing the resin composition is in contact with at least one layer of the metal-containing layer, the polyolefin layer and the polar resin layer.

6. A food packaging material, comprising the monolayer or multilayer film according to claim **3,** or the multilayer film according to claim 4 or 5.

7. A construction/industrial material, comprising the monolayer or multilayer film according to claim 3, or the multilayer film according to claim 4 or 5.

8. A component for secondary batteries, comprising the monolayer or multilayer film according to claim 3, or the multilayer film according to claim 4 or 5.

9. The component for secondary batteries according to claim 8, being an exterior material for lithium ion batteries.

10. The component for secondary batteries according to claim 8, being a tab lead film for lithium ion batteries.

11. A method for producing a monolayer or multilayer film, comprising melt extrusion forming the resin composition according to claim 1 or 2.

## Patentansprüche

1. Harzzusammensetzung, wobei
ein Gehalt an einem propylenbasierten Polymer (A), das nachstehendes (a) erfüllt, 20 bis 84 Masseteile beträgt,
ein Gehalt an einem propylenbasierten Polymer (B), das nachstehendes (b) erfüllt, 5 bis 35 Masseteile beträgt,
ein Gehalt an einem Polyolefin (C), das durch Modifizieren mit einer ungesättigten Carbonsäure und/oder einem Derivat davon erhalten wird und Struktureinheiten enthält, die von der ungesättigten Carbonsäure und/oder dem Derivat davon abgeleitet sind, 1 bis 20 Masseteile beträgt, und
ein Gehalt an einem ethylenbasierten Polymer (D), das nachstehendes (d) erfüllt, 5 bis 35 Masseteile beträgt,
mit der Maßgabe, dass ein Gesamtgehalt der Komponenten (A), (B), (C) und (D) 100 Masseteile beträgt, wobei
(a) ein Schmelzpunkt (Tm), beobachtet bei dynamischer Differenzkalorimetrie, weniger als 120°C und 100°C oder höher ist;
(b) das propylenbasierte Polymer (B) einen MFR im Bereich von 0,01 bis 100 g/10 Minuten, gemessen bei 230°C unter einer Last von 2,16 kg gemäß ASTM D1238, aufweist und die nachstehenden Anforderungen (b-1) und (b-2) erfüllt:
(b-1) ein Schmelzpunkt (Tm), beobachtet bei dynamischer Differenzkalorimetrie, ist niedriger als 100°C oder es wird kein Schmelzpunkt (Tm) beobachtet;
(b-2) das propylenbasierte Polymer (B) weist eine von Propylen abgeleitete Struktureinheit und eine Struktureinheit, abgeleitet von mindestens einem Olefin, ausgewählt aus Ethylen und α-Olefinen mit 4 bis 20 Kohlenstoffatomen, auf und ein Gehalt an der Struktureinheit, abgeleitet von mindestens einem Olefin, ausgewählt aus Ethylen und α-Olefinen mit 4 bis 20 Kohlenstoffatomen, beträgt 40 Mol-% oder weniger; und
(d) das ethylenbasierte Polymer (D) ein Ethylen-Homopolymer oder ein Copolymer von Ethylen und mindestens einem α-Olefin, ausgewählt aus α-Olefinen mit 3 bis 20 Kohlenstoffatomen, ist und einen MFR im Bereich von 0,1 bis 10 g/10 Minuten, gemessen bei 190°C unter einer Last von 2,16 kg gemäß ASTM D1238, aufweist.

2. Harzzusammensetzung gemäß Anspruch 1, wobei eine Dichte des ethylenbasierten Polymers (D) 0,87 g/cm³ oder weniger beträgt.

3. Einschichtige oder mehrschichtige Folie, umfassend mindestens eine Schicht, enthaltend die Harzzusammensetzung gemäß Anspruch 1 oder 2.

4. Mehrschichtige Folie, umfassend mindestens eine Schicht, enthaltend die Harzzusammensetzung gemäß Anspruch 1 oder 2 enthält, und mindestens zwei weitere Schichten, die von der die Harzzusammensetzung enthaltenden Schicht verschieden sind, wobei beide Seiten der die Harzzusammensetzung enthaltenden Schicht mit den weiteren Schichten in Kontakt stehen.

5. Mehrschichtige Folie, umfassend mindestens eine Schicht, enthaltend die Harzzusammensetzung gemäß einem der Ansprüche 1 bis 4, und mindestens eine Schicht, ausgewählt aus einer metallhaltigen Schicht, einer Polyolefinschicht und einer polaren Harzschicht, wobei die die Harzzusammensetzung enthaltende Schicht mit mindestens einer Schicht von der metallhaltigen Schicht, der Polyolefinschicht und der polaren Harzschicht in Kontakt steht.

6. Lebensmittelverpackungsmaterial, umfassend die einschichtige oder mehrschichtige Folie gemäß Anspruch 3 oder die mehrschichtige Folie gemäß Anspruch 4 oder 5.

7. Bau-/Industriematerial, umfassend die einschichtige oder mehrschichtige Folie gemäß Anspruch 3 oder die mehrschichtige Folie gemäß Anspruch 4 oder 5.

8. Komponente für Sekundärbatterien, umfassend die einschichtige oder mehrschichtige Folie gemäß Anspruch 3 oder die mehrschichtige Folie gemäß Anspruch 4 oder 5.

9. Komponente für Sekundärbatterien gemäß Anspruch 8, die ein Außenmaterial für Lithium-Ionen-Batterien ist.

10. Komponente für Sekundärbatterien gemäß Anspruch 8, die eine Anschlussfolie für Lithium-Ionen-Batterien ist.

11. Verfahren zur Herstellung einer einschichtigen oder mehrschichtigen Folie, umfassend das Schmelzextrusionsformen der Harzzusammensetzung gemäß Anspruch 1 oder 2.

## Revendications

1. Composition de résine, dans laquelle
une teneur en un polymère à base de propylène (A) satisfaisant à (a) ci-dessous est de 20 à 84 parties en masse,
une teneur en un polymère à base de propylène (B) satisfaisant à (b) ci-dessous est de 5 à 35 parties en masse,
une teneur en une polyoléfine (C) obtenue par modification avec un acide carboxylique insaturé et/ou un dérivé de celui-ci et contenant des motifs structuraux dérivés de l'acide carboxylique insaturé et/ou du dérivé de celui-ci est de 1 à 20 parties en masse, et
une teneur en un polymère à base d'éthylène (D) satisfaisant à (d) ci-dessous est de 5 à 35 parties en masse,
étant entendu qu'une teneur totale en composants (A), (B), (C) et (D) est de 100 parties en masse, dans laquelle
(a) un point de fusion (Tm) tel qu'observé en calorimétrie différentielle à balayage est inférieur à 120 °C et est supérieur ou égal à 100 °C ;
(b) le polymère à base de propylène (B) présente un indice de fluidité à chaud en masse (MFR) dans une plage de 0,01 à 100 g/10 minutes tel que mesuré à 230 °C sous une charge de 2,16 kg conformément à la norme ASTM D1238, et satisfait aux exigences (b-1) et (b-2) ci-dessous :
(b-1) un point de fusion (Tm) tel qu'observé en calorimétrie différentielle à balayage est inférieur à 100 °C, ou aucun point de fusion (Tm) n'est observé ;
(b-2) le polymère à base de propylène (B) présente une unité constitutive dérivée du propylène et une unité constitutive dérivée d'au moins une oléfine choisie parmi l'éthylène et les α-oléfines présentant 4 à 20 atomes de carbone, et une teneur en unité constitutive dérivée d'au moins une oléfine choisie parmi l'éthylène et les α-oléfines présentant 4 à 20 atomes de carbone est inférieure ou égale à 40 % en moles ; et
(d) le polymère à base d'éthylène (D) est un homopolymère d'éthylène ou un copolymère d'éthylène et d'au moins une α-oléfine choisie parmi les α-oléfines présentant 3 à 20 atomes de carbone, et présente un indice de fluidité à chaud en masse (MFR) dans une plage de 0,1 à 10 g/10 minutes tel que mesuré à 190 °C sous une charge de 2,16 kg conformément à la norme ASTM D1238.

2. Composition de résine selon la revendication 1, dans laquelle une densité du polymère à base d'éthylène (D) est inférieure ou égale à 0,87 g/cm³.

3. Film monocouche ou multicouche, comprenant au moins une couche contenant la composition de résine selon la revendication 1 ou la revendication 2.

4. Film multicouche, comprenant au moins une couche contenant la composition de résine selon la revendication 1 ou la revendication 2, et au moins deux autres couches autres que la couche contenant la composition de résine, dans lequel les deux faces de la couche contenant la composition de résine sont en contact avec les autres couches.

5. Film multicouche, comprenant au moins une couche contenant la composition de résine selon l'une quelconque des revendications 1 à 4, et au moins une couche choisie parmi une couche contenant un métal, une couche de polyoléfine et une couche de résine polaire, dans lequel la couche contenant la composition de résine est en contact avec au moins une couche parmi la couche contenant un métal, la couche de polyoléfine et la couche de résine polaire.

6. Matériau d'emballage alimentaire, comprenant le film monocouche ou multicouche selon la revendication 3, ou le film multicouche selon la revendication 4 ou la revendication 5.

7. Matériau de construction/industriel, comprenant le film monocouche ou multicouche selon la revendication 3, ou le film multicouche selon la revendication 4 ou la revendication 5.

8. Composant pour batteries secondaires, comprenant le film monocouche ou multicouche selon la revendication 3, ou le film multicouche selon la revendication 4 ou la revendication 5.

9. Composant pour batteries secondaires selon la revendication 8, étant un matériau extérieur pour batteries au lithium-ion.

10. Composant pour batteries secondaires selon la revendication 8, étant un film conducteur pour languette pour batteries au lithium-ion.

11. Procédé destiné à produire un film monocouche ou multicouche, comprenant le formage par extrusion à l'état fondu de la composition de résine selon la revendication 1 ou la revendication 2.
